# EUROPEAN PATENT APPLICATION

(11) **EP 2 782 318 A1**
(43) Date of publication of application: **24.09.2014**
(21) Application number: 13159749.4
(22) Date of filing: 18.03.2013
(51) Int. Cl.: H04L 29/08, G06F 9/50

(54) **Allocating resources between network nodes for providing a network node function**

(71) Applicant: Koninklijke KPN N.V., 2516 CK The Hague (NL); Nederlandse Organisatie voor Toegepast -Natuurwetenschappelijk Onderzoek TNO, 2628 VK Delft (NL)
(72) Inventor: Strijkers, Rudolf, 1033 DP Amsterdam (NL); Meulenhoff, Pieter Jan, 9804 PW Noordhorn (NL)
(74) Representative: Wuyts, Koenraad Maria

(57) **Abstract**

The invention provides a method wherein a first network node advertises available resources that a second network node may use to offload network node functions transparently to the first network node. Examples of the first network node are a client device (e.g. PC, notebook, tablet, smart phone), a server (e.g. application server, a proxy server, cloud location, router). Examples of the second network node are an application server, a cloud location or a router. The available resources may be located in the first network node or at another network node remote to the first network node..

## Description

### FIELD OF THE INVENTION

The present invention relates to the allocation of network node resources for providing a network node function, such as a server function. More specifically the invention relates to a method of allocating resources to network nodes for providing a network node function and a first network node that is communicatively connectable to a second network node for accessing a network node function.

### BACKGROUND

In client-server applications a server handles service requests from a client, e.g. to retrieve a web page from a web server. Usually, client and server communication is handled by a medium, such as a local area network, the Internet or a telecom network. Client-server sessions may be limited to a single service request and response, but may also include many consecutive requests and responses. It is known that network overhead can impact the end-to-end performance of client-server applications, especially when a single client request requires multiple calls to databases, application servers, or the client itself. Network overhead is caused by operational parameters of the network, intermediary networks, and network elements (e.g. latency, bandwidth, hops, affinity, data processing capacity, storage, geographical distance) between the server and the client device or the network of an operator servicing the client device.

When the client-server communication is composed of many consecutive client-server interactions, the waiting time can increase significantly with high network overhead. Moreover, any intermediate device between the client and server adds to the communication delay, e.g. due to propagation delay, buffering, queuing, error rate and/or congestion. Another factor affecting the perceived quality of experience can be processing capacity of client and server devices. For example a large volume of simultaneous requests may overload the capacity of the server and result in late or unanswered requests.

Reducing the impact of network overhead and processing capacity at the server can optimize the client's perceived quality of experience. Three categories of solutions are known that decrease the impact of communication latency and processing capacity at the server.

Firstly, by placing multiple servers in the network capable of handling the service request, client requests can be redirected to the best server, e.g. based on a geographic location (i.e. minimizing the distance between the client and the server) or processor load (i.e. minimizing the processor load on the server), using a server selection function such as a DNS resolver or a HTTP redirect.

US 2010/250668 discloses a system to transparently select a server to handle a client request based on the client and server's location in the network, falling within the first category of solutions as described above. In US 2010/250668 the server locations are known on beforehand, i.e. a server selection function selects the best server from a list of servers. When a client sends a service request, the server selection function (e.g. implemented in a DNS resolver when the request is based on the host name of the server) may provide the location of the nearest server that will handle the request. Alternatively, the request may be sent to a suboptimal server, which may trigger the server selection function to select a new server. Next, the server sends a redirect request to the client to connect to the better server.

A disadvantage of US 2010/250668 is that server resources may be wasted, because some servers may never be selected while they might be kept online in case a nearby client sends a request. Moreover, there are no mechanisms to offload parts or all of the server's functions, e.g. for specific clients or in reaction to specific service requests, to a location near or on the client's device.

Secondly, proxy servers can be placed between the client and server to offload server functions, e.g. for load balancing, caching and/or transcoding. Proxy servers act as intermediary between a client and a server and as such can perform operations on client requests and server responses on behalf of the destination servers. Proxy servers (e.g. Squid) are a well-known solution to distribute load over servers (by redirection), provide access to remote networks (the proxy is connected to both the client network and the remote network), reduce network load (e.g. by caching, protocol conversion and/or content compression), perform caching functions over service requests, and to offload server functionality (e.g. scan requests for malware, logging, applying policies, encrypting data, pre-rendering images and/or pre-rendering web sites for certain displays). Caching proxy servers can reduce server load and optimize network throughput, though they only improve performance when many similar requests are made to static (i.e. not or slowly changing over time) content. Unique or un-cacheable requests are forwarded to a server, thus becoming functionally equivalent to a server selection function. The client may not be aware of the proxy server when it is transparent to the client (e.g. from the perspective of the client, the proxy behaves like the original server). In other cases, the client is aware and sends requests to the proxy server instead of the server (e.g. a proxy server that provides access to the Internet).

Thirdly, servers can be implemented in such a way that portions of the server application are executed locally on the client, e.g. a script in a web browser or a program on the client's device. Part or all of the functions provided by the server may be offloaded on the client, e.g. as a client side script for form validation in a web browser, a Java Web Start application downloaded from the server or a native application downloaded from a remote server or application marketplace. Client side scripting (e.g. JavaScript, Flash, Silverlight) is common to web browsers and comes with limitations. For example, a client side program can only be run when the browser is available and operational and when the user triggers execution by visiting a web site. With code loaded in web browsers it is not possible to create longer lived sessions, e.g. outside the browser. The client or server may initiate downloading of server functions, for example when the client device has certain capabilities the server may want to use or optimize (e.g. a program to use a peripheral device on the client such as a camera or using the client device's graphics processor to speed up a GUI). The client typically has no control over the amount of resource consumption (e.g. the client cannot limit how much processing power or memory a Java applet or Flash code of a specific server uses). Also, the location of client script execution is tied to the client computer. Both disadvantages may result in processor or memory overloading of the client computer resulting in low perceived performance (e.g. increased response times and freezing of the user interface).

The known solutions can reduce communication latency or reduce the number of client-server interactions because a nearby network node (e.g. the selected server of the first category, the proxy server of the second category or the portion of the server application that is offloaded to the client) handles the service request or a part of the service request. Furthermore, the client and server can increase their resource usage efficiency (e.g. increase battery life on a client device by reducing communication over a wireless access point) by reducing the amount of communication, reducing the number of communication interactions and/or relocating a part of the server application to the client.

A common disadvantage of the aforementioned solutions is that the resources are under control and the responsibility of the service provider. For example, the service provider may need to provision a number of intermediate servers to provide geographically distributed clients the same perceived performance. The service provider also takes ownership of the resources and associated costs to handle service requests. A problem with client processing is that client resources may be limited and that client processing may introduce software dependencies. The consequence is that the client may need to manage software dependencies (e.g. web browsers, plug-ins, platforms) and its related issues (e.g. security, versioning). Moreover, client processing may slow down the client device or drain its battery or be insufficient to deliver the service.

### SUMMARY OF THE INVENTION

It is an object of the invention to provide for a solution that enables more effective use of network node resources that are available to a first network node for running a network node function

According to an aspect of the invention a method of allocating resources between network nodes is proposed for providing a network node function. The method can comprise transmitting resource availability data from a first network node to a second network node. The resource availability data can comprise information about one or more network node resources available to the first network node. The network node resources can be remote to the second network node. The method can further comprise analyzing the resource availability data to determine whether the network node resources are capable of providing the network node function to obtain a determination result. The method can further comprise, depending on the determination result, allocating one or more of the network node resources to provide the network node function. The method can further comprise transmitting request data from the first network node to the second network node. The request data can comprise a request for using the network node function. The method can further comprise intercepting the request data. The method can further comprise redirecting the request data to the allocated network node resources for providing the network node function to the first network node.

Examples of first and second network nodes are a client device (e.g. PC, notebook, tablet, smart phone or any other client device), a server (e.g. an application server), a proxy server, a cloud location or a router. Examples of network node functions are (parts of) application or network services. Application services are e.g. a web server, a HTTP proxy, database, web service (e.g. REST, SOAP), data stores, or content cache (e.g. CDN service). Examples of network services are Internet Gateways, DHCP servers, firewalls, network element functions (e.g. HSS, MME, PDN-GW), network control / signaling functions (e.g. IMS control functions, packet forwarding, path computation), and protocol implementations (OSPF, BGP, IPv4, IPv6).

The first network node may advertise resources available to the first network node that a second network node may use to offload network node functions. This may be done transparently to the first network node. The available resources may be located in the first network node or at another network node remote to the first network node.

The available network node resources may be defined in terms of: available CPU load; available memory; available disk space; available network bandwidth; a capability to load and execute a virtual machine; a capability to run applications designed for a particular operating system, CPU instruction set or script engine; a reference to a resource provider function; and/or any other resource related information.

For example, a server may offload a part of a service (i.e. an example of a network node function) to a client device based on an indication from the client device of available resources or offload intensive client-specific processing to available client resources.

The invention thus enables e.g. a service provider to decide if server functions can be offloaded to client resources and to allocate and load server functions on the resources available to the client device without intervention of the client device. The invention allows reduction of communication latency and processing latency (e.g. by using resources available to a client device, which may be located on the client device or in a local area network of the client device). Furthermore the invention enables e.g. a service provider to use resources available to a client (which may be provided by a third party) to handle client-specific workloads and tasks.

Thus, a solution is provided that enables more effective use of network node resources for running a network node function.

In an embodiment the request data can comprise the resource availability data.

The resource availability data and request data may thus be transmitted from the first network node to the second network node in a single message.

In an embodiment the transmitting of the resource availability data can comprises broadcasting the resource availability data from the first network node.

This enables client devices to broadcast their available network node resources as an alternative to transmitting the resource availability data to a server. This may reduce network load by offloading the network traffic to a broadcast channel.

In an embodiment the first network node can comprise the network node resources.

This enables network node resources local to the first network node to be used for allocating the network node function.

In an embodiment the resource availability data can comprise an indication of a resource provider function located at the first network node. The allocating of the network node resources can comprise transmitting one or more resource allocation instructions to the resource provider function for allocating the network node resources in the first network node.

This enables utilizing of a specialized function (i.e. the resource provider function) at the first network node for allocating the network node resources for executing the network node function.

In an embodiment a third network node can comprise the network node resources. The third network node can be communicatively connected to the first network node.

This enables network node resources remote to the first network node to be used for allocating the network node function. The remote network node resources are available to the first network node to use.

In an embodiment the resource availability data can comprise an indication of a resource provider function located at the third network node. The allocating of the network node resources can comprise transmitting one or more resource allocation instructions to the resource provider function for allocating the network node resources in the third network node.

This enables utilizing of a specialized function (i.e. the resource provider function) at the third network node for allocating the network node resources to the network node function.

In an embodiment the one or more resource allocation instructions can comprise an instruction for downloading the network node function in the allocated network node resources.

This enables a data image of the network node function to be loaded in the network node resources in case the network node function is not available on the network node resources.

In an embodiment the request data can be intercepted in one of the first network node or a fourth network node intermediary between the first network node and the second network node.

This enables different implementation of intercepting request data transmitted to the second network node for accessing the network node function. The intercepted request data may subsequently be redirected.

In an embodiment the resource availability data can comprise information about network node resources available at two or more different network nodes. The method can further comprise selecting one or more of the two or more different network nodes for allocating the network node resources in the one or more of the two or more different network nodes.

This enables a choice of one or more network node resources at different locations.

In an embodiment the method can further comprise updating the resource availability data to reflect a change in network node resources available to the first network node and transmitting the updated resource availability data from the first network node to the second network node.

This enables a relocation of the network node function to other network node resources if needed.

According to an aspect of the invention a first network node is proposed that is communicatively connectable to a second network node for accessing a network node function. The first network node can be configured to transmit resource availability data to the second network node. The resource availability data can comprise information about one or more network node resources available to the first network node. The first network node can further be configured to receive one or more resource allocation instructions from the second network node for allocating the network node resources in the first network node. The first network node can further be configured to transmit request data to the second network node. The request data can comprise a request for using the network node function. The first network node can further be configured to intercept the request data. The first network node can further be configured to redirect the request data to the allocated network node resources for providing the network node function.

In an embodiment the one or more resource allocation instructions can comprise an instruction for downloading the network node function in the allocated network node resources. The first network node can be further configured to download the network node function in the allocated network node resources.

In an embodiment the first network node is a client device.

In an embodiment the first network node is a mobile communication device.

Hereinafter, embodiments of the invention will be described in further detail. It should be appreciated, however, that these embodiments may not be construed as limiting the scope of protection for the present invention.

### BRIEF DESCRIPTION OF THE DRAWINGS

Aspects of the invention will be explained in greater detail by reference to exemplary embodiments shown in the drawings, in which:
Fig.1 is a flow diagram of an exemplary embodiment of the invention;
Fig.2 and Fig.3 are system architectures of exemplary embodiments of the invention; and
Fig.4 is a time-sequence diagram of an exemplary embodiment of the invention.

### DETAILED DESCRIPTION OF THE DRAWINGS

Known servers typically cannot use resources available to a client device other than the resources provided by the server or resources on the client device used by portions of a server application, even if sufficient resource capacity is available to the client. Examples of resource capacity that may be available but not used are e.g. resources in the form of a subscription to a cloud service (e.g. Google AppEngine, Amazon EC2), and resources a network operator makes available to the client device and/or a device close to the client device (e.g. a broadband router, set-top box, media center or any other computer). When computing resources of the client are e.g. insufficient, known servers are not able to e.g. resort to third parties that may provide resources for the client device.

By contrast, the present invention provides a method wherein a first network node, which is e.g. a client device (e.g. PC, notebook, tablet, smart phone or any other client device), a server (e.g. an application server), a proxy server, a cloud location or a router, may advertise available resources that a second network node, such as an application server, a cloud location or another router, may use to offload network node functions transparently to the first network node. Herein the available resources may be located in the first network node or at another network node remote to the first network node.

Examples of network node functions are (parts of) application or network services. Application services are e.g. a web server, a HTTP proxy, database, web service (e.g. REST, SOAP), data stores, or content cache (e.g. CDN service). Examples of network services are Internet Gateways, DHCP servers, firewalls, network element functions (e.g. HSS, MME, PDN-GW), network control / signaling functions (e.g. IMS control functions, packet forwarding, path computation), and protocol implementations (OSPF, BGP, IPv4, IPv6).

The available resources may be defined in terms of available CPU load, available memory, available disk space, available network bandwidth, a capability to load and execute a virtual machine, a capability to run applications designed for a particular operating system, a capability to run applications designed for a particular CPU instruction set, a reference to a resource provider function, and/or any other resource related information.

For example, a server may offload a part of a service (i.e. an example of a network node function) to a client device based on an indication from the client device of available resources or offload intensive client-specific processing to available client resources. The invention thus enables e.g. a service provider to decide if server functions can be offloaded to client resources and to allocate and load server functions without intervention of the client device. The invention allows reduction of communication latency (e.g. by using resources available to a client device, which may be located on the client device or in a local area network of the client device). Furthermore the invention enables e.g. a service provider to use available client resources to handle client-specific workloads and tasks.

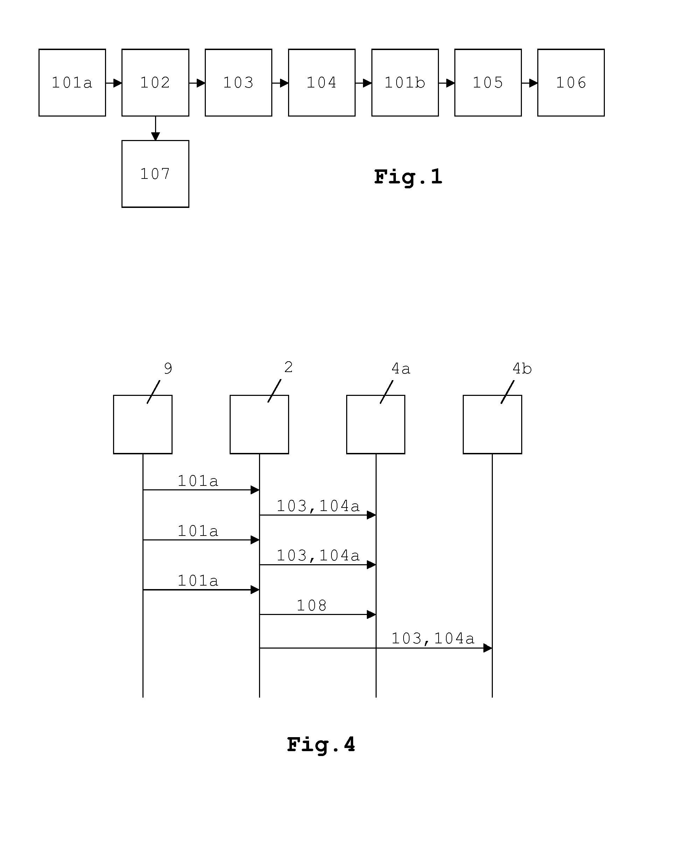

Fig.1 shows a flow diagram of an exemplary embodiment of the invention. A method is presented that enables a second network node, such as a server, to transparently access network node resources available to a first network node, such as a client device, as advertised in resource availability data sent from the first network node to the second network node. The resource availability data may be included with a request from the first network node to access a network node function at the second network node. The request is e.g. a service requests for accessing a service at the server. Any other method may be used to transmit the resource availability data to the second network node, e.g. broadcasting the resource availability data possibly on regular time intervals. The second network node may be configured to retrieve or receive the available data from a known network location.

With reference to Fig.1, in the following non-limiting example the first network node is a client device and the second network node is a server. The client device may advertise 101a information about the resources it can share. Hereto the client device may transmit 101a the resource availability data to the server. The server may analyze 102 the resource availability data to determine whether it can use the indicated resources. If the server cannot use the indicated resources, the information is discarded 107 and the indicated resources will not be used by the server. If the server can make use of the indicated resources, the server may use the information to request 103 the allocation of the network node resources to offload a server function to the network node resources. The server may request 104, possibly via the intermediary of a resource provider function as will be explained, a redirection function to update relevant data structures (e.g. by updating a DNS configuration). Consequently, subsequent client request data transmitted 101b to the server for accessing the server function may be intercepted 105 and redirected 106 to the offloaded server functions. Advantageously the server may transparently (i.e. without client intervention) use the resource available to the client to optimize service delivery, resulting in e.g. a reduced communication latency, an increase battery lifetime of the client device and/or a performance increase for application processing. The resources may be part of the client device or alternatively the resources may be provided by a third party resource provider having resources available to the client device. When using resources at a third party, the use of the resources may be charged and/or billed to a user of the client device by the third party.

A system that provides the functionality of Fig.1 may contain the following functional components in addition to the first network node, the second network node and the network node resources. A resource provider function (RPF) may provide an interface to allocate the network node resources available to the client device (or more generally to the first network node) and to load one or more offloaded server functions (or more generally offloaded second network node functions) on the network node resources. The RPF may be a part of the client device or a part of a third network node possibly of a third party if the available resources are located at the third network node. A redirection function may intercept and redirect specific client requests (or more generally request from the first network node) to the offloaded server function instead of the server (or more generally the second network node) that would otherwise handle the request. An offloaded server function (OSF) may provide

(a part of) the functionality of the server and is loaded on the allocated network node resources. An OSF decision function may optionally be used to decide if client resources can be used to offload server functions. The OSF decision function may be a part of the server if the server makes this decision. In case there is choice in selection of multiple client resources (e.g. a list of resource providers or a choice in resource configurations), a resource selection function (RSF) may be used to select the best resources to use. The RSF may be a part of the second network node.

The functional components may be implemented as computer program products.

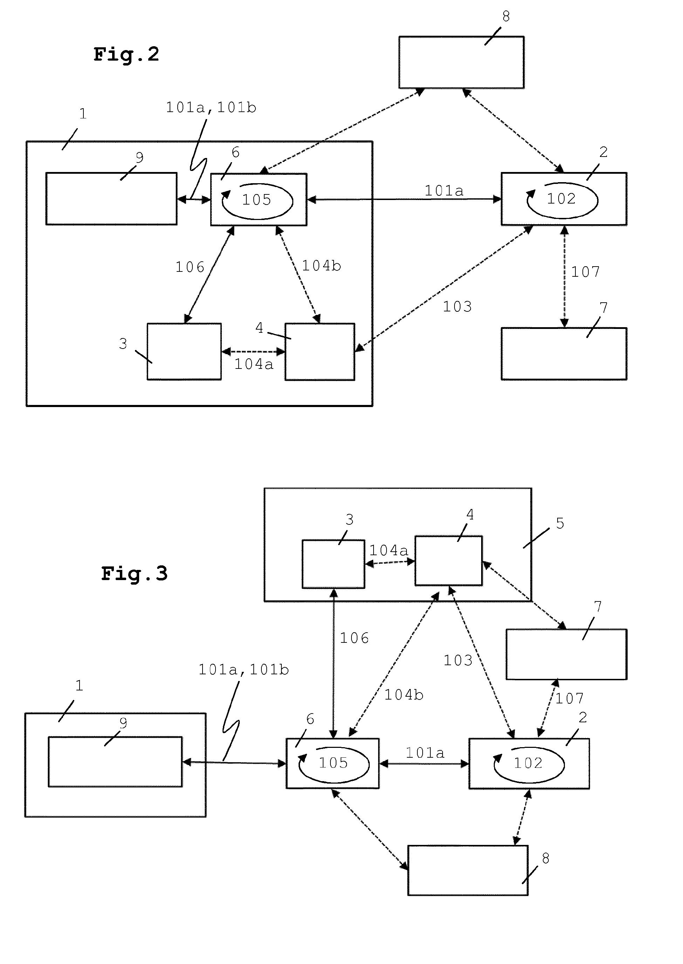

Fig.2 and Fig.3 show exemplary embodiments of systems that may implement the functionality as described with Fig.1. Elements of the system are indicated by the boxes. The arrows indicate information/data exchanges between the elements of the system or processing of information/data at an element or between elements. In the example of Fig.2 the RPF 4 is local to the client device 1 (e.g. on the client device). In the example of Fig.3 the client device 1 advertises one or more third party resource providers 5 (e.g. a cloud computing provider, a computing facility of an ISP, a set-top box or a network access router). The examples of Fig.2 and Fig.3 show a client device as first network node 1 and a server as second node 2, but are to be understood as applicable to any first network node 1 and second network node 2 as described above.

In the example of Fig.2 a client application 9 (e.g. a web browser or any other application) at the client device 1 sends 101a a request to a server application in a server 2, possibly via the intermediary of the redirection function 6 that may simply forward the request to the server 2. The request typically contains the resource availability data and optionally an advertisement of information such as a URL, operational parameters, settings, credentials, tokens and cryptographic keys of one or more RPF's 4 at the client device 1. The advertisement of information may optionally be sent to the server 2 via another path such as via an OSF decision function 8 external to the server 2 and/or separately from the resource availability data. If the OSF decision function 8 external to the server 2, an OSF decision function in the server 2 or the server 2 makes the decision 102 to allocate 104a the network node resources 3 for an OSF and the OSF is available at the network node resources 3, a redirection function 6 may be configured 104b to intercept 105 and redirect 106 service request data 101b to the OSF 3. Otherwise, the service request data arrives at the server application in the server 2. A possible implementation of the advertisement of one RPF 4 by the client device 1 is by embedding the advertisement in a HTTP request sent to the server application.

The server application at the server 2 may use the information in the advertisement and submit the information to an OSF decision function, which is either external or internal to the server 2. Optionally, in case a selection from multiple network node resources can be made, the information may be transmitted 107 to a RSF 7 to decide whether to create an OSF, to select the most optimal location for the OSF, and select which RP 4 to choose. Both the OSF decision function 8 and the RSF 7 may compare the resource availability data and optionally the information sent in the advertisement to the resource requirements of an OSF. For example the RP selection function 7 may decide to have an OSF created if the network node resources 3 that would be allocated 104a by the RPF 4 have sufficient processing power available. If the result of the analysis 102 is a decision to create an OSF at the available network node resources 3, the server 2 sends 103 a create OSF request data to the selected RPF 4. The request data may be sent 103 by the server 2 to the RP 4 embedded in a HTTP request or in any other manner. Information in the request data may include a requested operation (e.g. to create an OSF) and optionally operational parameters like (a reference to) an image of the OSF to be downloaded to the network node resources 3.

The RPF 4 may process the create OSF request data received 103 from the server 2 and allocates 104a the network node resources for the creation of the OSF. The RPF 4 typically also provisions 104b the redirection function 6. The redirection function 6 is a means to redirect 105 requests 101b from the client device 1 to the OSF running on the network node resources 3. Provisioning 104b of the redirection function 6 may include configuring the client device 1 (e.g. by updating local DNS information, configuring a proxy service, changing a routing table, configuring a firewall, changing the configuration of a web browser plugin, or changing the configuration of the client application 9) in order to intercept 105 and redirect 106 service requests 101b to the OSF at the allocated network node resources 3. If a service request 101b was in included with the resource availability data 101a, the server 2 may perform the first redirection of the service request to the OSF (e.g. with an HTTP redirect).

In the example of Fig.3 similar elements, information/data exchanges and processing of information/data as described with Fig.2 are shown, with some modifications to the use of a third party 5. The request 101a sent from the client device 1 to the server application at the server 2 includes resource availability data of network node resources 3 available to the client device 1 at a third party 5 and may contain an advertisement with information about one or more RPFs 4 at the third party 5. Examples of third parties 5 are a cloud resource provider, Azure, Amazon, or an internet service provider (ISP). The advertisement may be sent separately from the resource availability data and/or via another path to the server 2 (e.g. via an OSF decision function 8 external to the server 2). The advertisement may contain a list of data (e.g. a URL, operational parameters, settings, credentials, tokens, cryptographic keys) about local and/or third party RPFs 4. If an OSF can be allocated 104a to the network node resources or if the OSF is available and a OSF decision function (either within the server 2 or external to the server 2) or the server 2 decides 102 to make use of the OSF, a redirection function 6 may be configured 104b to intercept 105 and redirect 106 service requests from the client application to the OSF.

The server 2 may use an OSF decision function (external 8 or internal) and a RSF 7 to decide 102 if it is more optimal to allocate resources to an OSF and which resources 3 to use (e.g. by choosing which RPF 4 to choose) to host the OSF. Input to the OSF decision function and the RSF 7 typically include: expected resource consumption of the OSF, RPF 4 information (URL, access credentials, current status, interface protocol) provided by the client 1 and/or resource usage data provided by third party RPFs 3. The RSF 7 may query known RPs 4 for up-to-date resource usage data (e.g. computing load, memory consumption and/or network latency). After selection of the most optimal hardware resource location, the RPF 4 may be requested 103 by the server 2 to allocate the network node resources 3 to create an OSF (for instance via a HTTP web service call). An OSF may be created by the RPF 4. The RPF 4 typically also provisions the redirection function 6 to redirect service requests 101b from the client application to the OSF.

In the examples of Fig.2 and Fig.3 the location of the redirection function 6 may vary: at the client device 1 (e.g. implemented as a web proxy, in a router, as a DNS configuration or as a plugin of a web browser), at the location of the server 2 (e.g. using a HTTP redirect or plugin of the web server), or on another network node on the path between client 1 and server 2, e.g. an a proxy server, router, deep packet inspection device or DNS server. The redirection function 6 may operate at various protocol stack levels and may be implemented by network address translation, network traffic routing (routing table configuration), name service lookup (e.g. DNS lookup), or application-specific proxy (e.g. web proxy server). If no redirection function 6 is or can be provisioned, the service request data arrives at the server 2 instead of an OSF. When the redirection function 6, OSF, and client device 1 are located in a computer network under control of the same organization, the redirection function 6 may be implemented in the form of a reconfiguration of the same computer network, e.g. by configuration of routers, proxy servers, DNS configuration in an ISP network or configuration of a home router in a home network where a OSF is installed on a local device like a set top box, so that the request from the client 1 can be directly routed to the OSF.

With a client advertisement, the client application 9 at the client device 1 may update the information about local or third party resources, as shown in the example of Fig.4. For example, when an OSF is initially created on the client device 1 by a RPF 4a at the client device 1 in response to a first advertisement of available resources 101a to the server 2, the client 1 may report a change in the available network node resources (e.g. fewer available CPU cores) in a second advertisement 101a to the server 2, as depicted by the second advertisement 101a in Fig.4, in response whereof the RPF 4 at the client device 1 may change the allocation of the OSF at the network node resources 3. It is possible that the OSF requests the RPF 4a to change resource consumption.

The client 1 may provide a list of local and third party RPFs in client advertisements, and change this list over time. When all local resources 3 at the client device 1 are in use or the RSF 7 decides to use another resource 3, this may lead to a switch from a local RPF 4a to third party RPF 4b, in Fig.4 initiated by the third advertisement 101a. The RPF 4a at the client device 1 may subsequently be requested to kill and/or unload 108 the OSF, and the RPF 4b at the third party, e.g. at a cloud location, may be requested 103 to create 104a an OSF.

Current state information about resources may be communicated to a server 2 in updated resource availability data transmitted 101a from a client device to allow the server 2 to adapt. In response a server 2 may choose to create an OSF on a third party resource because the client device's CPU is reaching maximum capacity. The client 1 may advertise 101a client resources through other mechanisms, such as broadcasting (e.g. using mDNS) or via a list accessible to a known location (e.g. http://client-address/myresources). A proxy or RPF 4 may advertise 101a resources on behalf of the client device 1.

It is possible to deploy a complete server as OSF at network node resources 3 available to a client device 1. This may create an environment where a service provider no longer needs to provide resources to host the server functionality. All resources for the server functionality may then be delivered by the client device, either by the resources of the client device itself or by a third party resource provider operating on behalf of the client.

The following example is an implementation using HTTP and Java Web Start. Herein, the client application 9 is a web browser application. The OSF may be implemented by spawning a new process (of native code), running a script in a script engine, starting a new virtual machine in a hypervisor. A Java Web Start application is used which is running at the client computer 1. A HTTP request sent 101a by the client 1 to the server 2 may contain the following information:
GET /webapplication HTTP/1.1
Host: www.server.com
Resource-Provider: http://www.client.com
   /ResourceProvider

The HTTP request above contains a request for server application '/webapplication' at server www.server.com. Information about local resources is provided through the HTTP header attribute 'Resource-Provider' telling that a RPF 4 is available at 'http://www.client.com/ResourceProvider' (e.g. at the address of the client). The Resource-Provider HTTP header attribute may be added to the HTTP request e.g. by creating a browser plugin or proxy server on the path between client and server that inserts the attribute to the request.

The redirection function 6 may be implemented in various forms, such as a plugin added to the web browser (e.g. a firefox extension that allows to modify request content) or a HTTP proxy server installed on the client computer (e.g. using an apache HTTP server that rewrites requests, redirects incoming requests to other systems, and/or add headers to the forwarded request).

The RPF 4 may be implemented in the same plugin of the webbrowser or in the HTTP proxy that implements the redirection function. The RPF 4 may run a webservice to enable access by the server 2. The request 103 to the RPF 4 for creating a new OSF may provide the RPF 4 the location of the Java Webstart program (i.e. a datafile to be downloaded from some location). Hereto the request 103 may contain the URL and host to get the datafile , e.g. as follows:
GET /ResourceProvider?operation=create&
   location=http://www.server.com/server.jnlp
   HTTP/1.1
Host: www.client.com

Both the operation (create an OSF) and the location of the Java Web Start program may be passed as arguments to the request to the RPF 4. The RPF 4 may parse the request arguments and download the Java Web Start program from the specified location, after which it may be started on the network node resources 3. The RPF 4 typically changes 104b the configuration of a redirection function 6 (e.g. a plugin to the web browser or HTTP proxy on the client 1) to redirect requests 101b for the server functionality implemented by the OSF to the new OSF (e.g. a redirection rule based on the URL). After completion of this process the RPF 4 may send an acknowledgement to the server 2 to inform the server 2 about the location of the OSF, e.g. by sending the following information:
HTTP/1.1 200 OK
Date: Wed, 22 Nov 2012 11:31:00 GMT
Content-Type: text/html
OSF=http://www.client.com/OSFid

With this information the server 2 may generate a redirection response to the original request of the client 1, if that request already included request data for accessing the web application at the server 2. The redirection response may include the following information:
HTTP/1.1 301 Moved Permanently
Location: http://www.client.com/OSFid

New requests from the client 1 to the web application at the server 2 are intercepted 105 by the redirection function 6 implemented by the web browser plugin or a proxy server and redirected 106 to the local Java Web Start application running on the allocated network node resources 3. The Java Web Start application may be a java program, which implements a webserver.

The following is an example of an OSF hosted by a cloud provider 5. A third party such as the cloud provider 5 may have resources 3 available for the client device 1 to host an OSF allocatable by a RPF 4,4b at the cloud location 5. Examples of cloud providers are Amazon EC2, Microsoft Azure and Google App Engine (which provides a platform as a service or PaaS). In case of the Amazon EC2 service, a user of the client device 1 typically needs to advertise access credentials of the Amazon service to the server 2. In case of Amazon EC2, credentials are composed of the AWS Access Key and used to query the EC2 interface. This provides access to the Amazon EC2 interface for the server 2 and, if needed, the RSF 7. In this example the role of the RPF 4 may be played by the Amazon EC2 service. The interfaces to this service are provided by the EC2 web service.

The OSF placement function 8 and RSF 7 may be implemented as extension to the webserver. Most webserver implementations, such as Internet Information Server and Apache HTTP server, allow extensions to add additional processing functionality to an incoming request. A sample implementation of an OSF decision function 8 is shown in the following pseudo code.

```
 OSF OSFDecisionFunction(
 OSF osf_array[], // array of OSFs already running for client
 Requirements requirements // resource requirements of the OSF
 ){
  // iterator over all available OSFs
  for each ( OSF osf in osf_array ) {
    // if the OSF has enough free resources
    if ( osf.getAvailableResources > requirements) {
     // return the reference to this OSF
     return osf;
    }
  }
  // no OSF was found with enough resources
  // or no OSF was available at all.
   return NULL;
 }
```

Input to the above OSF decision function 8 is an array of known OSFs of this server 2 and client 1 and a data-structure describing the required resources of the OSF. The known OSFs are OSFs loaded on network node resources that may be available to the server 2 to offload server functions to. By iterating over the list of OSFs, the requirements are compared to the available resources 3 on the OSF. The first OSF with enough resources is returned and used to configure 104b the redirection function 6. If no OSF was found, NULL is returned which may be used as a signal to create a new OSF.

A sample implementation of a RSF 7 is shown in the following pseudo code.

```
 RP RPSelectionFunction(
 RP rp_array[], // array of resource providers
 Requirements requirements // resource requirements of an OSF
 ){
  // iterator over all available RPs
  for each ( RP rp in rp_array ) {
    // get accurate data on available resources at each RP
    rp.updateAvailableResources();
    // if the RP has enough resources
    if ( rp.getAvailableResources > requirements) {
     // return the reference to this RP
     return rp;
    }
  }
  // no RP was found with enough resources
  // or no RP was available at all.
   return NULL;
 }
```

Input to the above RSF function 7 is an array of known RPFs 4 and a data-structure describing the required resources for an OSF. By iterating over the list of RPFs, the requirements are compared to the available resource allocatable by the RPF 4. In this example, each RPF 4 is queried to get the latest data on available resources 3. If a RPF 4 is returned by the RSF function, this RPF 4 is used for creating a new OSF. If NULL is returned, no RPF 4 is found, and the server may resort to a default path and generate the response itself or generate a server error (e.g. a HTTP 503 Service Unavailable status code).

One embodiment of the invention may be implemented as a program product for use with a computer system. The program(s) of the program product define functions of the embodiments (including the methods described herein) and can be contained on a variety of non-transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

## Claims

1. A method of allocating resources between network nodes for providing a network node function, the method comprising:
transmitting (101a) resource availability data from a first network node (1) to a second network node (2), wherein the resource availability data comprises information about one or more network node resources (3) available to the first network node (1), the network node resources (3) being remote to the second network node (2);
analyzing (102) the resource availability data to determine whether the network node resources (3) are capable of providing the network node function to obtain a determination result;
depending on the determination result, allocating (103,104) one or more of the network node resources (3) to provide the network node function;
transmitting (101b) request data from the first network node (1) to the second network node (2), wherein the request data comprises a request for using the network node function;
intercepting (105) the request data; and
redirecting (106) the request data to the allocated network node resources (3) for providing the network node function to the first network node (1).

2. The method according to claim 1, wherein the request data comprises the resource availability data.

3. The method according to claim 1, wherein the transmitting (101a) of the resource availability data comprises broadcasting the resource availability data from the first network node (1).

4. The method according to any one of the claims 1-3, wherein the first network node (1) comprises the network node resources (3).

5. The method according to claim 4, wherein the resource availability data comprises an indication of a resource provider function (4) located at the first network node (1), and wherein the allocating (103,104) of the network node resources (3) comprises transmitting (103) one or more resource allocation instructions to the resource provider function (4) for allocating (1 04a) the network node resources (3) in the first network node (1).

6. The method according to any one of the claims 1-3, wherein a third network node (5) comprises the network node resources (3), wherein the third network node (5) is communicatively connected to the first network node (1).

7. The method according to claim 6, wherein the resource availability data comprises an indication of a resource provider function (4) located at the third network node (5), and wherein the allocating (103,104) of the network node resources (3) comprises transmitting (103) one or more resource allocation instructions to the resource provider function (4) for allocating (104a) the network node resources (3) in the third network node (5).

8. The method according to claim 5 or claim 7, wherein the one or more resource allocation instructions comprise an instruction for downloading the network node function in the allocated network node resources (3).

9. The method according to any one of the preceding claims, wherein the request data is intercepted (105) in one of the first network node (1) or a fourth network node (6) intermediary between the first network node (1) and the second network node (2).

10. The method according to any one of the preceding claims, wherein the resource availability data comprises information about network node resources (3) available at two or more different network nodes, and wherein the method further comprises selecting (107) one or more of the two or more different network nodes for allocating the network node resources in the one or more of the two or more different network nodes.

11. The method according to any one of the preceding claims, further comprising updating the resource availability data to reflect a change in network node resources available to the first network node (1) and transmitting the updated resource availability data from the first network node (1) to the second network node (2).

12. A first network node (1) that is communicatively connectable to a second network node (2) for accessing a network node function, wherein the first network node (1) is configured to:
transmit (101a) resource availability data to the second network node (2), wherein the resource availability data comprises information about one or more network node resources (3) available to the first network node (1);
receive (103) one or more resource allocation instructions from the second network node (2) for allocating the network node resources (3) in the first network node (1);
transmit (101b) request data to the second network node (2), wherein the request data comprises a request for using the network node function;
intercept (105) the request data; and
redirect (106) the request data to the allocated network node resources (3) for providing the network node function.

13. The first network node (1) according to claim 12, wherein the one or more resource allocation instructions comprise an instruction for downloading the network node function in the allocated network node resources (3), and wherein the first network node (1) is further configured to download the network node function in the allocated network node resources (1).

14. The first network node (1) according to claim 12 or claim 13, wherein the first network node (1) is a client device.

15. The first network node (1) according to claim 14, wherein the first network node (1) is a mobile communication device.
